# EUROPÄISCHE PATENTSCHRIFT

(11) **EP 0 625 925 B1**
(45) Veröffentlichungstag und Bekanntmachung des Hinweises auf die Patenterteilung: **02.05.1997**
(21) Anmeldenummer: 93903698.4
(22) Anmeldetag: 12.02.1993
(51) Int. Cl.: B01D 33/073, B01D 33/46, B29C 47/68

(54) **FILTRIERVORRICHTUNG FÜR VERUNREINIGTE KUNSTSTOFFSCHMELZEN**
FILTER FOR PLASTIC MELTS CONTAINING IMPURITIES
DISPOSITIF DE FILTRAGE POUR LES MATIERES PLASTIQUES FONDUES CONTAMINEES

(30) Priorität: 14.02.1992 AT 256/92
(43) Veröffentlichungstag der Anmeldung: 30.11.1994
(73) Patentinhaber: BACHER, Helmut, A-4490 St. Florian (AT); SCHULZ, Helmuth, A-4490 St. Florian (AT); WENDELIN, Georg, A-4433 Linz (AT)
(72) Erfinder: BACHER, Helmut, A-4490 St. Florian (AT); SCHULZ, Helmuth, A-4490 St. Florian (AT); WENDELIN, Georg, A-4433 Linz (AT)
(74) Vertreter: Wildhack, Helmut, Dipl.-Ing. Dr.
(86) Internationale Anmeldenummer: AT9300019
(87) Internationale Veröffentlichungsnummer: WO9315819

(56) Entgegenhaltungen:
- EP-A- 0 078 064
- EP-A- 0 164 004
- EP-A- 0 411 163
- DE-A- 3 706 352
- GB-A- 2 027 605
- US-A- 2 407 046

## Beschreibung

Die Erfindung bezieht sich auf eine Filtriervorrichtung für fließfähiges Material, das Feststoffteilchen enthält, mit einem Gehäuse, in welchem ein zu einer Achse rotationssymmetrisch ausgebildetes, hohlzylindrisches Filterelement angeordnet ist, dessen Mantelfläche mit einer Vielzahl von lochartigen Durchgangsöffnungen für das Filtrat versehen ist, wobei eine Einlaßöffnung des Gehäuses vorhanden ist, um das unter Druck zugeführte, zu filtrierende Material dem Filterelement von der Außenseite der Mantelfläche her zuzuleiten und das Filtrat durch das Filterelement von außen zu einem inneren Hohlraum zu leiten, der mit einer Auslaßöffnung des Gehäuses in Verbindung steht, wogegen zur kontinuierlichen Abfuhr der Rückstände von der Mantelfläche ein koaxial zum Filterelement angeordnetes, außen an der Mantelfläche des Filterelementes anliegendes, im Gehäuse unverdrehbar gehaltenes, der Krümmung des Filterelementes entlang einer Wendel folgendes Schaberelement vorhanden ist, so daß die Rückstände durch einen zwischen Filterelement und Gehäuse liegenden Ringspalt mit einer in Achsrichtung des Filterelementes gerichteten Bewegungskomponente zu einem gesonderten Auslaß transportiert werden, und wobei das Filterelement zu seiner Verdrehung um seine Achse mit einem Antrieb verbunden ist.

Eine Filtriervorrichtung dieser Art ist für einen Schlammsaugewagen bekannt (EP-A 164.004).

Eine andere Filtriervorrichtung ist aus der EP-A 411.163 bekannt. Bei dieser bekannten Konstruktion ist das Filterelement mit einem an seinem Ende angeordneten Flansch im Gehäuse eingespannt und es wird das Schaberelement, welches in Form eines Spiralbandes um die Außenmantelfläche des Filterelementes gewunden ist, durch eine Antriebswelle um die Achse des hohlzylindrischen Filterelementes verdreht. Dadurch werden einerseits die Rückstände von der Außenmantelfläche des Filterelementes abgekratzt und anderseits zu einer Auslaßöffnung des Gehäuses transportiert. Diese bekannte Konstruktion hat den Nachteil, daß das schraubenlinienförmig um das Filterelement herumgewundene Schaberelement dazu neigt, sich an der Außenmantelfläche des Filterelementes festzufressen, da ja auf dieses Schaberelement Reaktionskräfte einwirken, die von den abgeführten Verunreinigungen und der Umschlingungsreibung herrühren. Vermeidet man diesen Nachteil durch ein entsprechend groß bemessenes Spiel zwischen der Innenfläche des Spiralbandes und der Außenmantelfläche des Filterelementes, so ist die Schabwirkung des Spiralbandes nicht mehr ausreichend gegeben. Verläßlich kann dieser Nachteil nur dadurch beseitigt werden, daß das Spiralband mit großer Wandstärke ausgebildet wird, was aber nachteilige Auswirkungen auf die Gesamtbemessung, insbesondere den Außendurchmesser des das Filterelement aufnehmenden Gehäuses, hat und keine Selbstnachstellung zur Erzielung von Spielfreiheit zwischen Filterelement und Schaberelement zuläßt.

Die Erfindung setzt sich zur Aufgabe, die geschilderten Nachteile bei einer für die Reinigung verunreinigter Kunststoffschmelzen geeigneten Filtriervorrichtung verläßlich zu vermeiden, ohne den erwähnten Nachteil einer Vergrößerung des Gehäusedurchmessers in Kauf nehmen zu müssen. Die Erfindung löst diese Aufgabe dadurch, daß das Schaberelement zur Filtrierung verunreinigter Kunststoffschmelzen in mehrere Teilstücke unterteilt ist, deren jedes in radialer Richtung des Filterelementes nachgiebig im den Ringspalt außen begrenzenden Gehäuse gelagert ist und deren jedes nur über einen Abschnitt der axialen Länge des Filterelementes entlang eines Schraubenlinienabschnittes an diesem anliegt, wobei jedoch die Teilstücke entlang der ein- oder mehrgängigen Wendel verlaufen und daß das Filterelement einen von zahlreichen Kanälen durchsetzten Siebträgerkörper hat, an dessen Außenfläche eine im Vergleich zu ihm dünnwandige Siebronde anliegt, deren die Durchgangsöffnungen für das Filtrat bildende zahlreiche Sieböffnungen wesentlich geringeren Durchmesser haben als die Kanäle. Während also bei der zuletzt beschriebenen bekannten Konstruktion das Filterelement stillsteht und das spiralförmige Schaberelement verdreht wird, ist bei der erfindungsgemäßen Konstruktion die Anordnung umgekehrt, d.h. es wird das Filterelement verdreht und die Teilstücke des Schaberelementes stehen still. Auf diese Weise kann es nicht zu einem Festfressen des Schaberelementes, weder am Filterelement noch am Gehäuse, kommen und es kann das Schaberelement so dünn ausgebildet werden, daß der enge Ringraum zwischen der Außenmantelfläche des Filterelementes und der Innenmantelfläche des Gehäuses gerade ausreicht, um die Verunreinigungen verläßlich abführen zu können. Dadurch ergibt sich der Vorteil einer Verringerung des Gehäusedurchmessers. Dieser Vorteil gilt auch gegenüber der Konstruktion nach der eingangs erwähnten EP-A 164.004 sowie gegenüber einer weiteren bekannten Bauweise (EP-A 78.064), bei welcher das Schaberelement in Form mehrerer hydraulisch nachgiebig abgestützter Teilstücke von innen am Filterelement anliegt, und ferner auch gegenüber der Konstruktion nach der GB-A 2 027 605, bei welcher ein um seine Längsachse verdrehtes, hohlzylindrisches Filterelement zwar auch von außen nach innen vom Filtrat durchströmt wird, jedoch von einem Lamellenstapel gebildet ist, dessen einzelne Lamellen normal zur Längsachse des Filterelementes liegen, wobei ein einteiliger Schaber nachgiebig abgestützt am Außenmantel dieses Lamellenstapels anliegt.

Die Verdrehung des erfindungsgemäß ausgebildeten Filterelementes um seine Längsachse bereitet keine Schwierigkeiten, die von der Antriebswelle ausgeübte Torsionswirkung wird vom Siebträgerkörper aufgenommen, so daß das Filterelement nicht besonders stark ausgebildet zu werden braucht. Die eigentliche Filterwirkung wird von den Sieböffnungen der Siebronde ausgeübt, die an ihrer Außenfläche von den Teilstücken des Schaberelementes abgekratzt wird.

Die Unterteilung des Schaberelementes in einzelne, über die Länge des Filterelementes verteilte Teilstücke ermöglicht es bei entsprechender Einstellung, unterschiedliche Schabeffekte über verschiedene Teilstücke des Filterelementes zu erzielen bzw. das gewünschte Spiel zwischen Filterelement und den Teilstücken des Schaberelementes problemlos aufrecht zu erhalten.

Die Erfindung ermöglicht es, den geometrischen Aufbau der bekannten Filterelemente beizubehalten, also das Filterelement hohlzylindrisch zu gestalten. Gemäß einer Weiterbildung der Erfindung ist es hiebei zweckmäßig, das Filterelement an seinem einen, geschlossenen Stirnende mit einer Welle des Antriebes, gegebenenfalls über eine Kupplung, verbunden.

Im Rahmen der Erfindung kann eine nachgiebige Einwirkung der Teilstücke des Schaberelementes auf das Filterelement dadurch erzielt werden, daß die Teilstücke des Schaberelementes in radialer Richtung des Filterelementes nachgiebig im Gehäuse mittels außen am Schaberelement anliegender Druckfedern gelagert sind. Hiezu besteht eine besonders geeignete Bauweise erfindungsgemäß darin, daß jedes Teilstück an seiner Außenfläche zumindest einen radial angeordneten Bolzen trägt, der in einer radialen Bohrung des Gehäuses geführt ist und durch eine zwischen dem Ende dieser Bohrung und dem Stirnende des Bolzens eingespannte Feder nach innen gedrückt wird.

Gegebenenfalls können die Teilstücke des Schaberelementes auch teilweise in die Gehäusewand eingebettet sein.

Zweckmäßig liegt der Auslaß im Bereiche jenes Stirnendes des Filterelementes, welches der Auslaßöffnung für das Filtrat abgekehrt ist. In einem zum Auslaß führenden Kanal kann ein Förderelement, insbesondere eine Schnecke, zum Abtransport der Verunreinigungen vorgesehen sein. Auf diese Weise werden das Schaberelement bzw. seine Teilstücke, über welches bzw. welche ja der Transport der Verunreinigungen zur Ableitöffnung erfolgt, von Reaktionskräften entlastet. Diese Schnecke kann gemäß einer bevorzugten Ausführungsform der Erfindung von einem Abschnitt der Antriebswelle gebildet sein, und ein weiterer Abschnitt der Antriebswelle, welcher Abschnitt sich in Bezug auf die Transportschnecke jenseits des Auslasses befindet, kann als Schnecke mit einer zuvor erwähnten Schnecke entgegengesetzter Steigung ausgebildet sein, welche eine Dichtungswirkung vollführt. Der zum Auslaß führende, die Schnecke beinhaltende Abschnitt der Antriebswelle kann im Rahmen der Erfindung von einer Kühleinrichtung umgeben sein, um die Verunreinigungen abgekühlt nach außen zu transportieren.

Das unter Druck zugeführte, zu filtrierende Material übt auf das geschlossene Stirnende des Filterelementes eine Druckwirkung aus, welche das Filterelement in Richtung des Druckes zu verlagern trachtet. Dieser Druck kann zumindest teilweise dadurch kompensiert werden, daß die mit dem Stirnende des Filterelementes verbundene Antriebswelle einen geringeren Durchmesser aufweist als der Außendurchmesser des zylindrischen Filterelementes. Von der so gebildeten Ringfläche wird ein Gegendruck ausgeübt, welcher die erwähnte Kompensation bewirkt.

Die Siebronde kann in einfacher Weise auf den Siebträger aufgeschrumpft sein.

Die erfindungsgemäße Konstruktion eignet sich insbesondere für die Filtrierung von Kunststoffschmelzen auf dem Recycling-Gebiet.

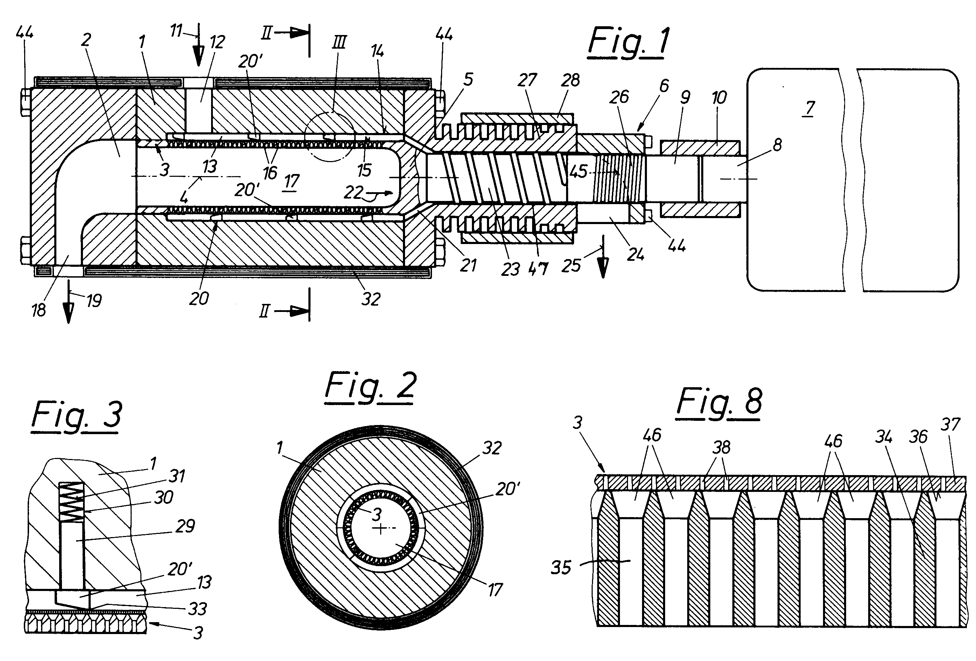

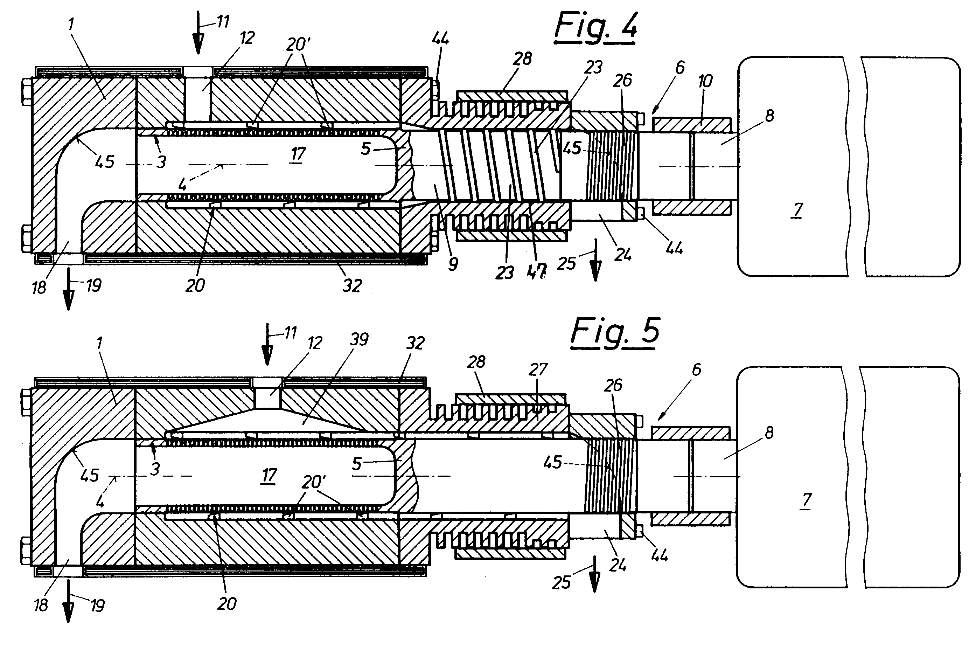

In der Zeichnung sind Ausführungsbeispiele des Erfindungsgegenstandes schematisch veranschaulicht. Fig. 1 zeigt einen Längsschnitt durch ein erstes Ausführungsbeispiel. Fig. 2 zeigt einen Schnitt nach der Linie II-II der Fig. 1. Fig. 3 zeigt das Detail III der Fig. 1 in größerem Maßstab. Die Fig. 4 bis 7 zeigen jeweils eine Ausführungsvariante im Längsschnitt. Fig. 8 zeigt einen Schnitt durch einen Abschnitt des Filterelementes in größerem Maßstab.

Bei der Vorrichtung nach Fig. 1 ist ein im wesentlichen hohlzylindrisches Gehäuse 1 vorgesehen, in dessen Hohlraum 2 ein im wesentlichen zylindrisches Filterelement 3 um seine Längsachse 4 verdrehbar gelagert ist. Dieses Filterelement 3 ist an seinem einen Stirnende 5 geschlossen und dort mit einem Antrieb 6 drehschlüssig verbunden. Der Antrieb 6 umfaßt einen Getriebemotor 7, mit dessen Antriebswelle 8 eine mit dem Stirnende 5 des Filterelementes 3 verbundene Welle 9 über eine Kupplung 10 drehschlüssig verbunden ist. Das zu filtrierende Material wird in Richtung des Pfeiles 11 durch eine Einlaßöffnung 12 in das Gehäuse 1 eingeführt und gelangt dort in einen engen Ringspalt 13 zwischen der Innenmantelfläche 14 des Gehäuses 1 und der Außenmantelfläche 15 des Filterelementes 3. Dieses Filterelement 3 ist mit einer Vielzahl von Durchgangsöffnungen 16 für das Filtrat versehen, welche von so kleinen Löchern gebildet sind, daß die aus dem zu filtrierenden Material abzuscheidenden Verunreinigungen zurückgehalten werden. Das Filtrat durchsetzt die Durchgangsöffnungen 16 und gelangt in den zylindrischen Hohlraum des Filterelementes 3, der mit einer Auslaßöffnung 18 des Gehäuses 1 in Verbindung steht, durch welche das Filtrat in Richtung des Pfeiles 19 aus der Vorrichtung austritt. Die vom Filterelement 3 zurückgehaltenen Verunreinigungen sammeln sich auf der Außenmantelfläche 15 des Filterelementes 3 an und werden von dort durch ein stillstehendes Schaberelement 20 in Richtung gegen das geschlossene Stirnende 5 des Filterelementes 3 transportiert. Hiezu verläuft das Schaberelement 20 in Teilstücken 20' schraubenlinienförmig um die Außenmantelfläche 15 des Filterelementes 3 herum, zweckmäßig mit konstanter Steigung der Schraubenlinie. Die einzelnen Teilstücke 20' liegen also jeweils mit ihrer Schabkante entlang eines kurzen Stückes der Schraubenlinie am Filterelement 3 an, folgen also der Krümmung desselben. Alle Schabkanten der einzelnen Teilstücke 20' sind nach der gleichen Seite gerichtet, so daß alle Teilstücke die Rückstände gegen das geschlossene Stirnende 5 des Filterelementes 3 zufördern. Alle Teilstücke des Schaberelementes 20 sind am Gehäuse 1 gegen Mitnahme durch das Filterelement gesichert, drehen sich also mit diesem nicht mit. Durch die Drehung des Filterelementes 3 um seine Längsachse 4 wird jedoch zusätzlich zur Abschabewirkung auf die Verunreinigungen eine Schubkomponente in Richtung der Achse 4 ausgeübt, welche die Verunreinigungen gegen das Stirnende 5 transportiert. Dort gelangen die Verunreinigungen in einen kegelstumpfförmigen Ringraum 21, welcher dadurch gebildet ist, daß die Welle 9 einen geringeren Durchmesser aufweist als die Außenmantelfläche 15 des Filterelementes 3. Diese Absetzung des Durchmessers hat folgenden Sinn: Das unter Druck durch die Einlaßöffnung 12 zugeführte zu filtrierende Material hat auch noch im Hohlraum 17 genügend Druck, um eine wesentliche Druckkomponente in Richtung des Pfeiles 22 auf das geschlossene Stirnende 5 des Filterelementes 3 auszuüben, so daß also das zu filtrierende Material das Filterelement 3 und die daran angeschlossene Welle 9 nach rechts (Fig.1) zu verschieben trachtet. Dieser Druck kann zumindest teilweise durch den Gegendruck kompensiert werden, welchen die ebenfalls unter Druck stehenden abgeführten Verunreinigungen im Ringraum 21 auf den kegelstumpfförmigen Abschnitt des Stirnendes 5 des Filterelementes ausüben. Dieser Gegendruck wird noch durch den Gegendruck einer Schnecke 23 unterstützt, welche einen Abschnitt der Antriebswelle 9 bildet. Auf diese Weise kann bei geeigneter Dimensionierung der Idealzustand, d.h. keine Axialkräfte, erzielt werden. Das Gehäuse der Schnecke 23 bildet einen Kanal 47 für die Abfuhr der Verunreinigungen, welche von der Schnecke 23 aus dem Ringraum 21 durch den Kanal 47 zu einem seitlich vom Gehäuse der Schnecke 23 wegführenden Auslaß 24 transportiert werden, durch welchen sie in Richtung des Pfeiles 25 austreten. In jenem Bereich der Welle 9, welcher in Bezug auf den Auslaß 24 der Schnecke 23 gegenüberliegt, ist eine weitere Schnecke 26 mit zur Schnecke 23 entgegengesetzter Steigung vorhanden, welche als Dichtung wirkt. Der die Schnecke 23 umgebende Abschnitt 27 des Gehäuses 1 kann außen mit Kühlrippen und zusätzlich mit einer Kühleinrichtung 28 versehen sein.

Das Schaberelement 20 kann mit seinen Teilstücken einer eingängigen Wendel mit konstanter Steigung folgen. Es kann dieses Schaberelement 20 jedoch auch mehrgängig angeordnet sein. In jedem Fall sind die Teilstücke 20' des Schaberelementes 20 am Gehäuse festgehalten und liegen jeweils nur über einen Abschnitt der axialen Länge des Filterelementes 3 an diesem an. Jedes dieser Teilstücke 20' ist nachgiebig im Gehäuse 1 gelagert, so daß bei entsprechender Anordnung alle diese Teilstücke 20' mit gleichem Druck an der Außenmantelfläche 15 des Filterelementes 3 anliegen. Hiezu trägt jedes Teilstück 20' zumindest einen radial angeordneten Bolzen 29 (Fig.3), der in einer radialen Bohrung 30 des Gehäuses 1 längsverschiebbar geführt ist. Die Bohrung 30 ist als Sackbohrung ausgebildet, an deren Ende eine Druckfeder 31 anliegt, die den Bolzen 29 und damit das entsprechende Teilstück 20' des Schaberelementes 20 radial nach innen zu drücken trachtet. Gegebenenfalls kann der Druck der Feder 31, zweckmäßig durch ein verstellbares Widerlager, einstellbar sein. Die einzelnen Teilstücke 20' des Schaberelementes 20 haben in Förderrichtung derart abgeschrägte, dem Filterelement 3 zugewendete Stirnflächen, daß die eine Kratzwirkung auf das Filterelement 3 ausübende Kante 33 dem geschlossenen Stirnende 5 des Filterelementes 3 zugewendet ist.

Das Gehäuse 1 kann außen von einem Heizband 32 umgeben sein, um die zugeführte Kunststoffschmelze auf gewünschter Temperatur halten zu können.

In Fig.8 ist der Aufbau des Filterelementes 3 genauer dargestellt. Es hat einen Siebträgerkörper 34, der von einer Vielzahl radialer Kanäle 35 für das Filtrat durchsetzt ist. An der Außenfläche 36 des Siebträgerkörpers 34 liegt eine im Vergleich zu ihm dünnwandige Siebronde 37 an, die zweckmäßig auf den Siebträgerkörper 34 aufgeschrumpft ist. Die Siebronde 37 hat eine noch größere Anzahl von Sieböffnungen 38, die durch Laserstrahleinwirkung hergestellt sein können. Ihr Durchmesser ist wesentlich kleiner als jener der Kanäle 35, so daß die Sieböffnungen 38 nur von der Kunststoffschmelze durchsetzt werden können, nicht jedoch von deren Verunreinigungen. Zweckmäßig erweitern sich die Kanäle 35 gegen die Siebronde 37 zu, um möglichst viele Sieböffnungen 38 wirksam zu machen. Die Erweiterungen 46 der Kanäle 35 können in einfacher Weise dadurch hergestellt werden, daß an der Außenfläche 36 des Siebträgerkörpers 34 ein Gewinde, insbesondere mit Trapezquerschnitt, oder Ringnuten eingearbeitet werden. Die Siebronde 37 wird dann an den Spitzen dieses Gewindes bzw. an den zwischen den Ringnuten verbleibenden Rippen befestigt.

Bei der Ausführungsform nach Fig.4 haben das sich drehende Filterelement 3 und die in einem Abschnitt als Schnecke 23 ausgebildete Welle 9 im wesentlichen denselben Außendurchmesser. Falls die von der Schnecke 23 nach links (Fig.4) auf die Welle 9 ausgeübte Reaktionskraft nicht genügend groß ist, wird es also bei entsprechendem Druck des über die Einlaßöffnung 12 zugeführten Materiales zu einer Axialkraft auf das Filterelement 3 nach rechts kommen. Es empfiehlt sich daher, eine solche Anlage nur bei geringeren Drücken des zugeführten zu reinigenden Materiales zu verwenden.

Bei der Ausführungsform nach Fig.5 ist die Einlaßöffnung 12 des Gehäuses 1 mit einer dem Filterelement 3 zugewendeten Verbreiterung 39 versehen, die sich in axialer Richtung des Filterelementes 3 über fast die gesamte Länge desselben erstreckt. Eine solche Verbreiterung, welche schlitzartig im Gehäuse 1 ausgebildet ist, bildet einen Verteiler für das zugeführte Material, welcher dieses Material über die gesamte Länge des Filterelementes 3 diesem zuführt. Dies unterstützt die Filterwirkung des Filterelementes 3. Weiters setzt sich das Schaberelement 20 bzw. dessen Teilstücke 20' in den Abschnitt 27 des Gehäuses 1 bis zum Auslaß 24 fort, so daß also das Schaberelement 20 auch den Austrag der abgeschiedenen Verunreinigungen besorgt. Die Schnecke 23 kann also hier entfallen. Ein begrenzter Gegenschub nach links auf das Filterelement 3 kann durch die die Abdichtung bewirkende Schnecke 26 erfolgen.

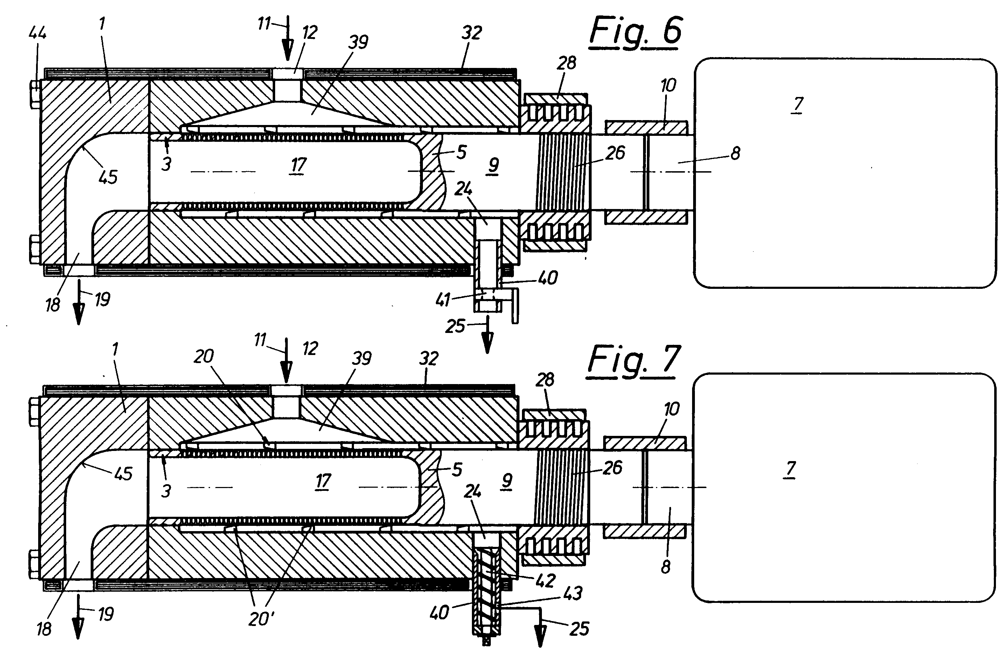

Die Ausführungsform nach Fig.6 ähnelt jener nach Fig.5, nur ist der Auslaß 24 für die Verunreinigungen näher an das geschlossene Stirnende 5 des Filtereelementes 3 herangerückt und sitzt - in Strömungsrichtung der Verunreinigungen gesehen - vor der Kühleinrichtung 28. Dies bewirkt eine raschere Abfuhr der Verunreinigungen. Außerdem ist in den Auslaß 24 ein Rohr 40 eingesetzt, in dessen aus dem Gehäuse 1 bzw. dem Heizband 32 herausragenden Ende ein Ventil 41 sitzt. Dadurch können die abgeführten Verunreinigungen partienweise abgelassen werden.

Die Ausführungsform nach Fig.7 ähnelt jener nach Fig.6, jedoch ist statt des Ventiles 41 im Rohr 40 ein Förderelement in Form einer durch einen gesonderten Antrieb angetriebenen Schnecke 42 angeordnet, welche die Verunreinigungen durch eine seitlich im Rohr angeordnete Austrittsöffnung 43 nach außen abführt.

Bei allen Ausführungsformen ist aus Gründen der einfacheren Herstellung das Gehäuse 1 aus zumindest zwei Teilen zusammengesetzt, die untereinander mittels Schrauben 44 verbunden sind. Dadurch ist es möglich, im Gehäuse 1 die seitlich wegführenden Öffnungen 18, 24 mit gekrümmten Leitwänden 45 herzustellen, die eine sanfte Umlenkung des Stromes des fließenden Materiales bewirken und so verhindern, daß einzelne Partien des behandelten Gutes längere Zeit in der Vorrichtung verbleiben und auf diese Weise thermisch geschädigt werden. Bei den Ausführungsformen nach den Fig.6 und 7 entfällt die Leitwand 45 im Bereich des Auslasses 24.

## Patentansprüche

1. Filtriervorrichtung für fließfähiges Material, das Feststoffteilchen enthält, mit einem Gehäuse (1), in welchem ein zu einer Achse (4) rotationssymmetrisch ausgebildetes, hohlzylindrisches Filterelement (3) angeordnet ist, dessen Mantelfläche (15) mit einer Vielzahl von lochartigen Durchgangsöffnungen (16) für das Filtrat versehen ist, wobei eine Einlaßöffnung (12) des Gehäuses (1) vorhanden ist, um das unter Druck zugeführte, zu filtrierende Material dem Filterelement (3) von der Außenseite der Mantelfläche (15) her zuzuleiten und das Filtrat durch das Filterelement (3) von außen zu einem inneren Hohlraum (17) zu leiten, der mit einer Auslaßöffnung (18) des Gehäuses (1) in Verbindung steht, wogegen zur kontinuierlichen Abfuhr der Rückstände von der Mantelfläche (15) ein koaxial zum Filterelement (3) angeordnetes, außen an der Mantelfläche (15) des Filterelementes (3) anliegendes, im Gehäuse (1) unverdrehbar gehaltenes, der Krümmung des Filterelementes (3) entlang einer Wendel folgendes Schaberelement (20) vorhanden ist, so daß die Rückstände durch einen zwischen Filterelement (3) und Gehäuse (1) liegenden Ringspalt (13) mit einer in Achsrichtung des Filterelementes (3) gerichteten Bewegungskomponente zu einem gesonderten Auslaß (24) transportiert werden, und wobei das Filterelement (3) zu seiner Verdrehung um seine Achse (4) mit einem Antrieb (6) verbunden ist, dadurch gekennzeichnet, daß das Schaberelement (20) zur Filtrierung verunreinigter Kunststoffschmelzen in mehrere Teilstücke (20') unterteilt ist, deren jedes in radialer Richtung des Filterelementes (3) nachgiebig im den Ringspalt (13) außen begrenzenden Gehäuse (1) gelagert ist und deren jedes nur über einen Abschnitt der axialen Länge des Filterelementes (3) entlang eines Schraubenlinienabschnittes an diesem anliegt, wobei jedoch die Teilstücke (20') entlang der ein- oder mehrgängigen Wendel verlaufen und daß das Filterelement (3) einen von zahlreichen Kanälen (35) durchsetzten Siebträgerkörper (34) hat, an dessen Außenfläche eine in Vergleich zu ihm dünnwandige Siebronde (37) anliegt, deren die Durchgangsöffnungen (16) für das Filtrat bildende zahlreiche Sieböffnungen (38) wesentlich geringeren Durchmesser haben als die Kanäle (35).

2. Filtriervorrichtung nach Anspruch 1, dadurch gekennzeichnet, daß das Filterelement (3) an seinem einen geschlossenen Stirnende (5) mit einer Welle (9) des Antriebes (6), gegebenenfalls über eine Kupplung (10) verbunden ist.

3. Filtriervorrichtung nach Anspruch 1 oder 2, dadurch gekennzeichnet, daß die Teilstücke (20') teilweise in die Wand des Gehäuses (1) eingebettet sind.

4. Filtriervorrichtung nach einem der Ansprüche 1 bis 3, dadurch gekennzeichnet, daß jedes Teilstück (20') an seiner Außenfläche zumindest einen radial angeordneten Bolzen (29) trägt, der in einer radialen Bohrung (30) des Gehäuses (1) geführt ist und durch eine zwischen dem Ende dieser Bohrung (30) und dem Stirnende des Bolzens (29) eingespannte Feder (31) nach innen gedrückt wird.

5. Filtriervorrichtung nach einem der Ansprüche 1 bis 4, dadurch gekennzeichnet, daß in einem zum Auslaß (24) führenden Kanal (47) ein Förderelement, insbesondere eine Schnecke (23) zum Abtransport der Verunreinigungen vorgesehen ist, welches Förderelement vom Antrieb (6) für das Filterelement (3) angetrieben ist.

6. Filtriervorrichtung nach Anspruch 5, dadurch gekennzeichnet, daß die Schnecke (23) von einem Abschnitt der Antriebswelle (9) gebildet ist.

7. Filtriervorrichtung nach Anspruch 6, dadurch gekennzeichnet, daß der die Schnecke (23) bildende Abschnitt der Antriebswelle (9) von einer Kühleinrichtung (28) umgeben ist.

8. Filtriervorrichtung nach einem der Ansprüche 2 bis 7, dadurch gekennzeichnet, daß die mit dem geschlossenen Stirnende (5) des Filterelementes (3) verbundene Antriebswelle (9) einen geringeren Durchmesser aufweist als der Außendurchmesser des Filterelementes (3).

9. Filtriervorrichtung nach einem der Ansprüche 1 bis 8, dadurch gekennzeichnet, daß die Einlaßöffnung (12) des Gehäuses (1) mit einer dem Filterelement (3) zugewendeten Verbreiterung (39) versehen ist, die sich in axialer Richtung des Filterelementes (3) über einen wesentlichen Teil dessen Länge, vorzugsweise über zumindest die Hälfte derselben, erstreckt.

10. Filtriervorrichtung nach einem der Ansprüche 1 bis 9, dadurch gekennzeichnet, daß sich die Kanäle (35) des Siebträgerkörpers (34) gegen die Siebronde (37) zu im Querschnitt verbreitern.

11. Filtriervorrichtung nach einem der Ansprüche 1 bis 10, dadurch gekennzeichnet, daß die Siebronde (37) auf den Siebträgerkörper (34) aufgeschrumpft ist.

12. Filtriervorrichtung nach einem der Ansprüche 1 bis 11, dadurch gekennzeichnet, daß an der Außenfläche (36) des Siebträgerkörpers (34) ein Gewinde, insbesondere mit Trapezquerschnitt, oder Ringnuten eingearbeitet ist bzw. sind und daß die Siebronde (37) an den Spitzen des Gewindes bzw. an den zwischen den Ringnuten verbleibenden Rippen befestigt ist.

## Claims

1. A filter assembly for flowable material containing solids particles, having a housing (1) in which there is arranged a hollow-cylindrical filtering element (3) which is axially symmetrical about an axis (4) and whose surface (15) is provided with a plurality of hole-like openings (16) for the filtrate, an inlet (12) of the housing (1) being present to convey the material to be filtered ― which is fed under pressure ― from the exterior of the surface (15) to the filtering element (3) and to convey the filtrate through the filtering element (3) from the exterior to an inner cavity (17) connected to an outlet (18) of the housing (1), on the other hand a scraper element (20) ― which is arranged coaxial with the filtering element (3), contacts with the exterior of the surface (15) of the filtering element (3), is held in the housing (1) so as to be non-rotatable and follows the curvature of the filtering element (3) along a coil ― being present to continuously remove the residues from the surface (15), so that the residues are transported through an annular clearance (13) located between the filtering element (3) and the housing (1) with a component motion directed in the axial direction of the filtering element (3) to reach a separate outlet (24), and the filtering element (3) being connected to a drive (6) for rotation about its axis (4), characterised in that the scraper element (20) for filtering contaminated plastic melts is divided into a plurality of segments (20') each of which is ― in the radial direction of the filtering element (3) ― yieldingly mounted in the housing (1) defining the annular clearance (13) to the exterior and each of which only contacts ― contact being along a spiral portion ― the filtering element (3) over a portion of the axial length thereof, the segments (20') however running along the single or multiple coil, and in that the filtering element (3) has a screen bearing body (34) through which a plurality of channels (35) pass and with the outer surface of which there contacts a screen disc (37) which is thin-walled compared with the screen bearing body (34) and whose numerous screen openings (38) forming the openings (16) for the filtrate have a substantially smaller diameter than the channels (35).

2. A filter assembly in accordance with Claim 1, characterised in that the closed end face (5) of the filtering element (3) is connected to a shaft (9) of the drive (6), optionally via a coupling (10).

3. A filter assembly in accordance with Claim 1 or 2, characterised in that the segments (20') are partially embedded in the wall of the housing (1).

4. A filter assembly in accordance with any one of Claims 1 to 3, characterised in that each segment (20') bears at least one radially arranged bolt (29) at its outer surface, this bolt (29) extending in a radial bore (30) of the housing (1) and being urged inwards by a spring (31) clamped between the end of this bore (30) and the end face of the bolt (29).

5. A filter assembly in accordance with any one of Claims 1 to 4, characterised in that a conveying element, in particular a screw conveyor (23), for transporting away the contaminants is provided in a channel (47) leading to the outlet (24), which conveying element is driven by the drive (6) for the filtering element (3).

6. A filter assembly in accordance with Claim 5, characterised in that the screw conveyor (23) is formed by a portion of the driving shaft (9).

7. A filter assembly in accordance with Claim 6, characterised in that the portion of the driving shaft (9) forming the screw conveyor (23) is surrounded by a cooling device (28).

8. A filter assembly in accordance with any one of Claims 2 to 7, characterised in that the diameter of the driving shaft (9) connected to the closed end face (5) of the filtering element (3) is smaller than the external diameter of the filtering element (3).

9. A filter assembly in accordance with any one of Claims 1 to 8, characterised in that the inlet (12) of the housing (1) is provided with a widening (39) facing the filtering element (3), this widening (39) extending over a substantial part of the length of the filtering element (3) in the axial direction of the latter, preferably over at least half of its length.

10. A filter assembly in accordance with any one of Claims 1 to 9, characterised in that the channels (35) of the screen bearing body (34) widen in cross-section towards the screen disc (37).

11. A filter assembly in accordance with any one of Claims 1 to 10, characterised in that the screen disc (37) is shrunk onto the screen bearing body (34).

12. A filter assembly in accordance with any one of Claims 1 to 11, characterised in that a thread, in particular of trapezoidal cross-section, or annular grooves is/are made at the outer surface (36) of the screen bearing body (34), and in that the screen disc (37) is secured to the crests of the thread or to the ribs remaining between the annular grooves as the case may be.

## Revendications

1. Dispositif de filtrage pour matériau fluide contenant des particules solides, comprenant un logement (1) dans lequel est agencé un élément filtrant (3) cylindrique creux à symétrie de révolution par rapport à un axe (4), dont l'enveloppe externe (15) présente une pluralité d'orifices de passage (16) en forme de trous pour le filtrat, un orifice d'admission (12) étant ménagé dans le logement (1) pour amener le matériau à filtrer transporté sous pression à l'élément filtrant (3) par la face externe de l'enveloppe externe (15) et conduire le filtrat à travers l'élément filtrant (3) de l'extérieur vers une cavité interne (17), qui communique avec un orifice d'évacuation (18) ménagé dans le logement (1), les résidus étant quant à eux évacués en continu de l'enveloppe externe (15) au moyen d'un élément de raclage (20) épousant la courbure de l'élément filtrant (3) en décrivant une hélice, maintenu non rotatif dans le logement (1), agencé coaxialement à l'élément filtrant (3) et reposant contre l'extérieur de l'enveloppe externe (15) de l'élément filtrant (3), de façon que les résidus soient transportés à travers un passage annulaire (13) situé entre l'élément filtrant (3) et le logement (1) avec une composante de mouvement orientée dans la direction axiale de l'élément filtrant (3) en direction d'un orifice de sortie (24) séparé et l'élément filtrant (3) étant relié à un dispositif d'entraînement (6) pour son entraînement en rotation autour de son axe (4), caractérisé en ce que l'élément de raclage (20) pour le filtrage de matières plastiques fondues contaminées est divisé en plusieurs éléments partiels (20'), dont chacun est monté sur palier et de manière souple dans la direction radiale de l'élément filtrant (3) dans le logement (1) délimitant extérieurement le passage annulaire (13) et dont chacun ne repose contre l'élément filtrant que sur une partie de la longueur axiale de l'élément filtrant (3) formant une portion d'hélice, les éléments partiels (20') décrivant toutefois une hélice à une ou plusieurs spires et en ce que l'élément filtrant (3) comporte un support de tamis (34) traversé par de nombreux canaux (35), à la surface externe duquel repose un tamis cylindrique (37) comparativement mince et dont les nombreux orifices de tamis (38) formant les orifices de passage (16) du filtrat ont un diamètre considérablement inférieur à celui des canaux (35).

2. Dispositif de filtrage selon la revendication 1, caractérisé en ce que l'élément filtrant (3) est relié à son extrémité frontale fermée (5) à un arbre (9) du dispositif d'entraînement (6), le cas échéant par un accouplement (10).

3. Dispositif de filtrage selon la revendication 1 ou 2, caractérisé en ce que les éléments partiels (20') sont partiellement encastrés dans la paroi du logement (1).

4. Dispositif de filtrage selon l'une quelconque des revendications 1 à 3, caractérisé en ce que chaque élément partiel (20') porte sur sa surface externe au moins une vis (29) agencée radialement, qui est engagée dans un alésage radial (30) du logement (1) et qui est plaquée vers l'intérieur par un ressort (31) monté entre l'extrémité de cet alésage (30) et l'extrémité frontale de la vis (29).

5. Dispositif de filtrage selon l'une des revendications 1 à 4, caractérisé en ce que dans un canal (47) menant à l'orifice de sortie (24) est prévu un élément de transport, en particulier une vis sans fin (23) pour l'évacuation des impuretés, lequel élément de transport est entraîné par le dispositif d'entraînement (6) de l'élément filtrant (3).

6. Dispositif de filtrage selon la revendication 5, caractérisé en ce que la vis sans fin (23) est constituée d'une portion de l'arbre d'entraînement (9).

7. Dispositif de filtrage selon la revendication 6, caractérisé en ce que la portion de l'arbre d'entraînement (9) formant la vis (23) est entourée d'un dispositif de refroidissement (28).

8. Dispositif de filtrage selon l'une des revendications 2 à 7, caractérisé en ce que l'arbre d'entraînement (9) relié à l'extrémité frontale fermée (5) de l'élément filtrant (3) a un diamètre inférieur au diamètre externe de l'élément filtrant (3).

9. Dispositif de filtrage selon l'une des revendications 1 à 8, caractérisé en ce que l'orifice d'admission (12) du logement (1) présente un évasement (39) en direction de l'élément filtrant (3), qui s'étend, dans la direction axiale de l'élément filtrant (3), sur une grande partie de la longueur dudit élément filtrant, de préférence sur au moins la moitié de ladite longueur.

10. Dispositif de filtrage selon l'une des revendications 1 à 9, caractérisé en ce que les canaux (35) du support de tamis (34) s'évasent en direction du tamis cylindrique (37).

11. Dispositif de filtrage selon l'une des revendications 1 à 10, caractérisé en ce que le tamis cylindrique (37) est monté par rétreint sur le support de tamis (34).

12. Dispositif selon l'une des revendications 1 à 11, caractérisé en ce que sur la surface externe (36) du support de tamis (34) sont ménagés un filetage, en particulier avec un profil trapézoïdal, ou des gorges et en ce que le tamis cylindrique (37) est fixé au sommet du filet ou aux nervures définies entre les gorges.
